# EUROPEAN PATENT SPECIFICATION

(11) **EP 2 516 896 B1**
(45) Date of publication and mention of the grant of the patent: **19.03.2014**
(21) Application number: 10801472.1
(22) Date of filing: 24.12.2010
(51) Int. Cl.: F16H 61/662, F16H 55/56, F16H 9/18

(54) **CONTINUOUSLY VARIABLE TRANSMISSION**
STUFENLOS EINSTELLBARE ÜBERTRAGUNG
TRANSMISSION A VARIATION CONTINUE

(30) Priority: 24.12.2009 NL 1037588
(43) Date of publication of application: 31.10.2012
(73) Proprietor: Robert Bosch GmbH, 70442 Stuttgart (DE)
(72) Inventor: FAES, Paulus Adrianus Josephus Maria, NL-5045 ZH Tilburg (NL)
(74) Representative: Plevier, Gabriel Anton Johan Maria
(86) International application number: PCT/NL2010/000179
(87) International publication number: WO 2011/078657

(56) References cited:
- EP-A1- 0 389 030
- EP-A2- 1 348 893
- DE-A1- 10 052 652
- DE-A1-102005 037 937
- US-A- 3 965 766
- US-A1- 2002 142 870

## Description

The invention, which is specified in claims 1 and 2, relates to a continuously variable transmission or CVT with a drive belt wrapped around two pulleys, in particular for use in passenger motor vehicles. Each pulley is provided with a pair of pulley sheaves or discs, whereof one sheave is fixed to a shaft of the pulley and one is axially displaceable relative to the pulley axle by being provided on a sleeve that is fitted around the pulley shaft. The displaceable sheave of each pulley can be urged over the pulley shaft towards the fixed sheave of that pulley by means of a displacement means thereof. Typically, such displacement means are hydraulically actuated and include a piston/cylinder-assembly.

The sheave pair of each pulley defines a V-shaped groove wherein a part of the drive belt is held under the influence of a clamping force exerted between the pulley sheaves by the displacement means. The pulley clamping forces determine both the transmission ratio of, and the torque that can be transmitted by the CVT.

Because only one sheave of each pulley is axially displaceable, the pulley V-grooves can be perfectly aligned, i.e. mutually positioned in line in the axial direction, only for one or maximum two transmission ratios, as is described in for example the European patent publication EP-A-0 291 129, which discloses the features of the preambles of claims 1 and 2. In all other transmission ratios, the pulley V-grooves are out of alignment to a greater or lesser extent. As a result of such geometrically determined axial pulley misalignment, the drive belt follows a slightly skewed trajectory in-between the pulleys and enters between the sheave pairs thereof at an angle. In the known art, the pulleys are incorporated in the transmission such that their V-grooves are mutually aligned in the transmission ratio wherein the highest power is to be transferred by the transmission during operation.

From another European patent publication EP-A-1 427 953 it is known that the pulley sheaves deform elastically during operation, i.e. dynamically, under the influence of the clamping force. In particular the sheaves deflect in axial direction away from each other, such that the axial separation there between increases. Such mutual sheave deflection is the most pronounced at the more radially outward positions of the drive belt between the pulley sheaves. As a result of such mutual sheave deflection, a radial position (also denoted as a running radius) of the drive belt decreases more or less gradually along the arc-shaped trajectory of the drive belt between the pulley sheaves.

It is an insight underlying the present invention that such mutual sheave deflection may not be evenly distributed between the two sheaves of the pulley. Typically, the displaceable sheave shows a larger axial deformation than the fixed sheave. As a result, not only the radial position of the drive belt decreases as described in the known art, but also its axial position is displaced relative to its theoretical position between two non-deformed, perfectly rigid sheaves. Put differently, due to an asymmetrical distribution of the mutual sheave deflection between the pulley sheaves, the middle of the pulley V-groove shifts in the axial direction towards the most deforming sheave.

It is noted that, even if two pulleys of essentially the same design are applied in the CVT, such axial shift of the middle of the pulley V-grooves will not be the same for both pulleys. First of all, a radial position of the drive belt in the pulley V-grooves and hence the mutual sheave deflection typically differs between the two pulleys and secondly the pulleys are normally incorporated in the transmission with their displaceable and fixed sheaves on mutually opposite axial sides. As a result, the axial pulley (mis-)alignment and the skewed trajectory of the drive belt are affected during operation. According to the invention, an increase in misalignment is disadvantageous in that it reduces the power transmission efficiency of the CVT and/or increases the mechanical loading of the drive belt.

According to the invention, even an unevenly distributed mutual sheave deflection may in fact be utilised favourably. In particular, it was found that the geometrically determined axial pulley misalignment can be partly counteracted, i.e. reduced, by the mutual sheave deflection during operation if the displaceable sheave of a pulley is designed stiffer than the fixed sheave, i.e. if the displaceable pulley sheave deforms less than the fixed pulley sheave during operation. Preferably, both pulleys of the CVT are designed such.

The invention will be explained with reference to the attached figures.
Figure 1 shows a schematic cross section of a continuously variable transmission with two adjustable pulleys according to the prior art.
Figure 2 is a graph providing a geometrically determined (mis-)alignment of the pulleys as a function of a transmission ratio of the transmission.
Figure 3 illustrates the elastic deformation of the known pulley design as approximated by means of FEM-analysis thereof.
Figure 4 illustrates the elastic deformation of a novel pulley design as approximated by means of FEM-analysis thereof.

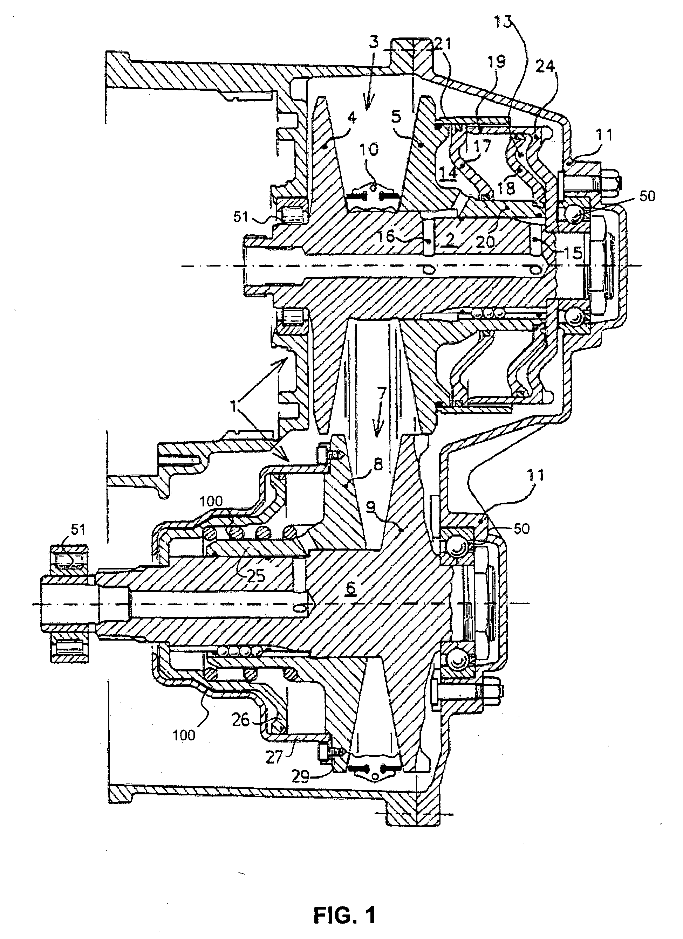

The continuously variable transmission 1 illustrated diagrammatically and in cross section in figure 1 is provided inside a transmission housing 11 thereof with a primary adjustable pulley 3 and a secondary adjustable pulley 7 according to the prior art. Each one pulley 3, 7 comprises a pair of sheaves, which sheave pairs are arranged on a primary pulley shaft 2 and secondary pulley shaft 6, respectively. The sheave pair of each pulley 3, 7 define a V-shaped circumference groove wherein a part of a drive belt 10 is held.

The pulley shafts 2, 6 are mounted in bearings 50, 51 in the transmission housing 11. A first sheave 4, 9 of each pulley 3, 7 is fixed to the respective pulley shaft 2, 6, whereas a second sheave 5, 8 thereof is provided axially displaceable relative to the respective pulley shaft 2, 6 by being placed on a respective sleeve 20, 25 fitted around such respective shaft 2, 6. As a result, a radial position of the drive belt 10 between the sheave pair of each pulley 3, 7 and hence the transmission ratio can be set.

The axially displaceable sheaves 5 and 8 are each provided with a hydraulically actuated piston/cylinder-assembly for realising a clamping force on the drive belt 10. For the displaceable sheave 8 of the secondary pulley 7, this is a single piston/cylinder assembly 26, 27 and for the displaceable sheave 5 of the primary pulley 3, this is a double piston/cylinder assembly. The double piston/cylinder assembly comprises first and second cylinder chambers 13, 14. The first cylinder chamber 13 is enclosed by the cylinder 19, 24, the piston 18 and the primary pulley shaft 2. The second cylinder chamber 14 is enclosed by the cylinder 21, the piston 17, the displaceable sheave 5 and the sleeve 20 of the primary pulley shaft 2. Fluid can be passed to and from the cylinder chambers 13 and 14 through bores 15 and 16, such that the displaceable sheave 5 and its sleeve 20 is moved axially along the primary pulley shaft 2. The piston/cylinder assembly 26, 27 of the displaceable sheave 8 of the secondary pulley 7 have a similar construction and operation, however, in addition a cylindrical coil spring 100 is provided inside the cylinder 27 thereof for effecting a basic clamping force on the drive belt 10, also in the absence of oil pressure in the piston/cylinder-assemblies. It is noted that in certain transmission designs a spring is applied in a cylinder chamber 13, 14 of the primary pulley 3 as well.

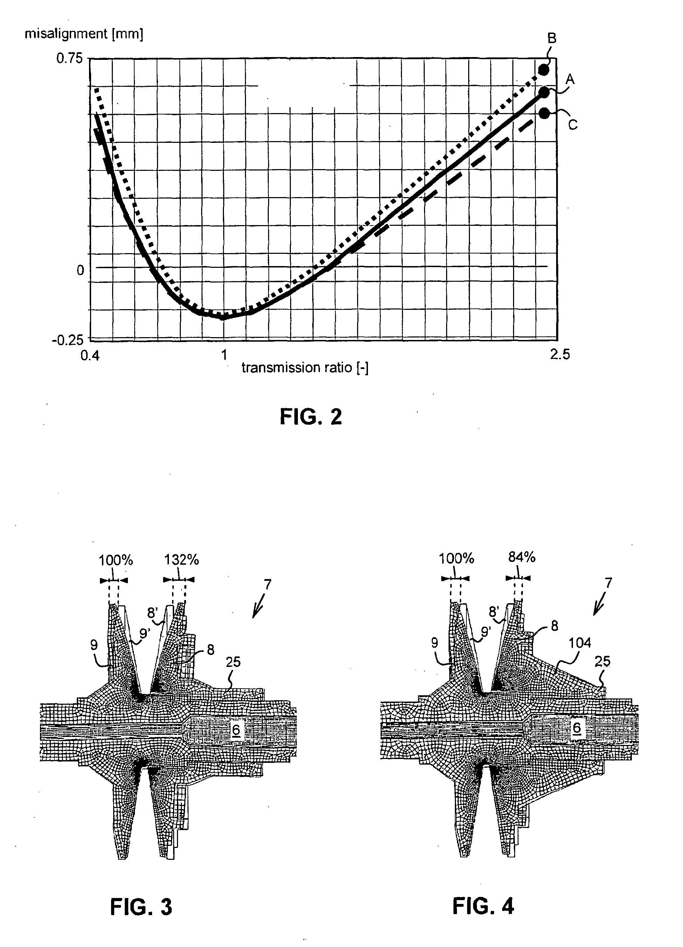

In figure 2 the solid line indicates the geometrically determined amount of misalignment between the pulley V-grooves in relation the transmission ratio as defined by the radial position of the drive belt 10 on the secondary pulley 7 divided by the radial position of the drive belt 10 on the primary pulley 3. It can be seen in figure 2 that the pulleys 3, 7 are aligned (i.e. misalignment=0) in two transmission ratios on either side of medium ratio (i.e. 1:1 ratio), but that they are misaligned in every othertransmission ratio, in which latter cases the drive belt 10 enters the pulley V-grooves at an angle. The transmission ratio(s) wherein the pulleys 3, 7, i.e. the pulley V-grooves are aligned is chosen in the design stage and/or at the assembly of he transmission 1, i.e. the zero misalignment x-axis can cross the y-axis at any desired position relative to the misalignment curve (i.e. the curves line in figure 2). Preferably, however, the pulley V-grooves are mutually aligned in the transmission ratio wherein the highest power is to be transferred by the transmission during operation.

In figure 3 the elastic deformation of the secondary pulley 7 according to the known design of figure 1 is illustrated in cross-section for the operating condition with the highest occurring value both for the radial position of the drive belt 10 between the pulley sheaves 8, 9 and for the clamping force exerted on the drive belt 10. It appears that an axial deflection of the displaceable sheave 8 of the secondary pulley 7 amounts to 0.25 mm, or 132% of the axial deflection of 0.19 mm of the fixed sheave 9 thereof. As a result, the middle of the V-groove of this secondary pulley 7 is displaced to the right in figure 3, at least relative to the non-deformed pulley sheaves 8', 9'. This effect causes the said misalignment to increase, e.g. from point A to point B in figure 2. The dotted line in figure 2 thus indicates the maximum amount of misalignment between the pulley V-grooves during operation of the transmission in relation the transmission ratio.

According to the invention it is thus favourable to incorporate the displaceable sheave 5 or 8 and the fixed sheave 4 or 9 of a pulley 3 or 7 with an essentially equal stiffness such that during operation both sheaves deform, i.e. axially deflect to a similar extent, in which case the pulley V-groove misalignment is solely geometrically determined.

Alternatively, according to the invention, the displaceable sheave 5 or 8 is incorporated in the transmission with a stiffness that exceeds the stiffness of the fixed sheave 4 or 9. An example of such a pulley design is shown in cross-section in figure 4 that illustrated the elastic deformation thereof for the same operating conditions as are the basis for figure 3. As compared to the known pulley design of figures 1 and 3, in this novel pulley design the displaceable sheave 8 is incorporated with a significantly increased stiffness by the application of a support or strengthening rib, ribs or collar 104 of predominantly conical shape provided between this sheave 8 and its sleeve 25. By this measure the axial deflection of the displaceable sheave 8 could be reduced to 0.16 mm, or only 84% of the axial deflection of 0.19 mm of the fixed sheave 9. As a result, the middle of the V-groove of this secondary pulley 7 is displaced to the left in figure 3, at least relative to the non-deformed pulley sheaves 8', 9'. This effect causes the said misalignment to decrease, e.g. from point A to point C in figure 2. The dashed line in figure 2 indicating the maximum amount of misalignment between the pulley V-grooves in relation the transmission ratio during operation of the transmission provided with pulleys 3, 7 according to the design of figure 4.

It is noted that the above example and the number mentioned in relation thereto relate to the minimal modification of a known pulley design by incorporating therein the strengthening collar 104 and as such is merely indicative of the attainable positive result. In case of a complete redesign of the pulley 3, 7 that is fully committed to make optimal use of the invention, a much improved result is in fact attained.

It is further noted that, departing from a known pulley design, the invention may be implemented either by stiffening (i.e. strengthening) the displaceable sheave 5, 8 as described in the above or by reducing the stiffness of the fixed sheave 4, 9 (or both). However, reducing the stiffness of a pulley sheave is principally not preferred, since the axial deformation of the sheave during operation and, consequently, a radial displacement or slip of the drive belt, is significantly increased thereby, resulting in a disadvantageous decrease of the efficiency of the power transmission as a whole.

It is still further noted that, by implementing the measure according to the invention, the (two) transmission ratio(s) where the pulleys 3, 7 are aligned (i.e. misalignment=0) during operation has changed relative to the known transmission design. This effect is apparent from figure 2, when it is compared where the dashed line (representing the invention) crosses the zero misalignment x-axis in comparison with the dotted line (representing the prior art). This effect, may, of course, be compensated for by changing the alignment of the pulleys 3, 7 in the design stage and/or at the assembly of the transmission 1 in the opposite direction.

## Claims

1. Continuously variable transmission (1) with a drive belt (10) and with two adjustable pulleys (3, 7) that are each provided with two pulley sheaves (4,5: 8, 9) whereof a first pulley sheave (4; 9) is fixed to a pulley shaft (2; 6) of the respective pulley (3; 7) and whereof a second pulley sheave (5; 8) is axially displaceable relative to the respective pulley shaft (2; 6) by being provided on a sleeve (20; 25) of that pulley shaft (2; 6), **characterized in that** a maximum elastic deformation in the axial direction during operation of the transmission (1) of the second pulley sheave (5; 8) is smaller than the corresponding axial deformation of the first pulley sheave (4; 9) for both the said two adjustable pulleys (3, 7).

2. Continuously variable transmission (1) with a drive belt (10) and with two adjustable pulleys (3, 7) that are each provided with two pulley sheaves (4,5; 8, 9), whereof a first pulley sheave (4; 9) is fixed to a pulley shaft (2; 6) of the respective pulley (3; 7) and whereof a second pulley sheave (5; 8) is axially displaceable relative to the respective pulley shaft (2; 6) by being provided on a sleeve (20; 25) of that pulley shaft (2; 6), **characterized in that** a stiffness of the first pulley sheave (4; 9) is smaller than the stiffness of the second pulley sheave (5; 8) for both the said two adjustable pulleys (3, 7).

3. Continuously variable transmission (1) according to one of the preceding claims, **characterized in that** the two adjustable pulleys (3, 7) are each provided with hydraulically actuated displacement means that include a piston/cylinder-assembly, whereof a cylinder (21; 27) is attached to or is part of the respective second sheave (5 ;8).

4. Continuously variable transmission (1) according to one of the preceding claims, **characterized in that**, in between the second pulley sheave (5; 8) of at least one the two pulleys (3; 7) and the respective sleeve (20; 25) thereof a support or strengthening rib, ribs or collar (104) of predominantly conical shape is provided.

## Patentansprüche

1. Stufenloses Getriebe (1) mit einem Antriebsriemen (10) und mit zwei verstellbaren Riemenscheiben (3, 7), die jeweils mit zwei Riemenscheibenrollen (4, 5; 8, 9) bereitgestellt sind, wobei eine erste Riemenscheibenrolle (4; 9) an einer Riemenscheibenwelle (2; 6) der zugehörigen Riemenscheibe (3; 7) befestigt ist und wobei eine zweite Riemenscheibenrolle (5; 8) axial in Bezug auf die zugehörige Riemenscheibenwelle (2; 6) verschiebbar ist, indem sie auf einer Hülse (20; 25) dieser Riemenscheibe bereitgestellt wird, **dadurch gekennzeichnet, dass** eine maximale elastische Verformung in axialer Richtung während des Betriebs des Getriebes (1) der zweiten Riemenscheibenrolle (5; 8) geringer ist als die entsprechende axiale Verformung der ersten Riemenscheibenrolle (4; 9) für beide der zwei verstellbaren Riemenscheiben (3; 7).

2. Stufenloses Getriebe (1) mit einem Antriebsriemen (10) und mit zwei verstellbaren Riemenscheiben (3, 7), die jeweils mit zwei Riemenscheibenrollen (4, 5; 8, 9) bereitgestellt sind, wobei eine erste Riemenscheibenrolle (4; 9) an einer Riemenscheibenwelle (2; 6) der zugehörigen Riemenscheibe (3; 7) befestigt ist und wobei eine zweite Riemenscheibenrolle (5; 8) in Bezug auf die zugehörige Riemenscheibenwelle (2;6) axial verschiebbar ist, indem sie auf einer Hülse (20; 25) der Riemenscheibe bereitgestellt wird, **dadurch gekennzeichnet, dass** eine Steifigkeit der ersten Riemenscheibenrolle (4; 9) kleiner als die Steifigkeit der zweiten Riemenscheibenrolle (5; 8) beider der zwei verstellbaren Riemenscheiben (3; 7) ist.

3. Stufenloses Getriebe (1) nach einem der vorherigen Ansprüche, **dadurch gekennzeichnet, dass** die zwei verstellbaren Riemenscheiben (3; 7) jeweils mit hydraulisch betätigten Verschiebungsmitteln bereitgestellt sind, die eine Kolben- bzw. Zylinderanordnung aufweisen, wobei ein Zylinder (21; 27) an einer zugehörigen zweiten Riemenscheibenrolle (5; 8) befestigt ist oder Teil davon ist.

4. Stufenloses Getriebe (1) nach einem der vorherigen Ansprüche, **dadurch gekennzeichnet, dass** zwischen der zweiten Riemenscheibenrolle (5; 8) mindestens eine der zwei Riemenscheiben (3; 7) und der zugehörigen Hülse (20; 25) davon eine Stütz- oder Verstärkungsrippe,-rippen oder -kragen (104) mit vorwiegend konischer Form bereitgestellt sind.

## Revendications

1. Transmission à variation continue (1) comprenant une courroie d'entraînement (10) et comprenant deux poulies ajustables (3, 7) qui sont pourvues chacune de deux réas de poulie (4, 5 ; 8, 9), dont un premier réa de poulie (4 ; 9) est fixé à un arbre de poulie (2 ; 6) de la poulie respective (3 ; 7) et dont un deuxième réa de poulie (5 ; 8) est déplaçable axialement par rapport à l'arbre de poulie (2 ; 6) respectif en étant prévu sur un manchon (20 ; 25) de cet arbre de poulie (2 ; 6), **caractérisée en ce qu'**une déformation élastique maximale dans la direction axiale, pendant le fonctionnement de la transmission (1), du deuxième réa de poulie (5 ; 8) est inférieure à la déformation axiale correspondante du premier réa de poulie (4 ; 9) pour les deux dites poulies ajustables (3, 7).

2. Transmission à variation continue (1) comprenant une courroie d'entraînement (10) et comprenant deux poulies ajustables (3, 7) qui sont pourvues chacune de deux réas de poulie (4, 5 ; 8, 9), dont un premier réa de poulie (4 ; 9) est fixé à un arbre de poulie (2 ; 6) de la poulie respective (3 ; 7) et dont un deuxième réa de poulie (5 ; 8) est déplaçable axialement par rapport à l'arbre de poulie (2 ; 6) respectif en étant prévu sur un manchon (20 ; 25) de cet arbre de poulie (2 ; 6), **caractérisée en ce qu'**une rigidité du premier réa de poulie (4 ; 9) est inférieure à la rigidité du deuxième réa de poulie (5 ; 8) pour les deux dites poulies ajustables (3, 7).

3. Transmission à variation continue (1) selon l'une des revendications précédentes, **caractérisée en ce que** les deux poulies ajustables (3, 7) sont pourvues chacune de moyens de déplacement actionnés hydrauliquement qui comportent un ensemble piston/cylindre, dont un cylindre (21 ; 27) est fixé au deuxième réa (5 ; 8) respectif ou fait partie de ce dernier.

4. Transmission à variation continue (1) selon l'une des revendications précédentes, **caractérisée en ce qu'**il est prévu une nervure, des nervures ou un collier (104) de support ou de renforcement de forme principalement conique entre le deuxième réa de poulie (5 ; 8) d'au moins l'une des deux poulies (3 ; 7) et le manchon (20 ; 25) respectif de celui-ci.
